# Europäisches Patentamt
# European Patent Office
# Office européen des brevets

(11) Veröffentlichungsnummer: **0 048 332**
**B1**

(12) **EUROPÄISCHE PATENTSCHRIFT**

(45) Veröffentlichungstag der Patentschrift:
**27.12.85**

(21) Anmeldenummer: **81106115.9**

(22) Anmeldetag: **05.08.81**

(51) Int. Cl.⁴: **D 03 D 15/00**, F 16 G 1/16,
B 65 G 15/34

(54) **Antriebs- oder Fördergurt.**

(30) Priorität: **24.09.80 DE 3035883**

(43) Veröffentlichungstag der Anmeldung:
**31.03.82 Patentblatt 82/13**

(45) Bekanntmachung des Hinweises auf die Patenterteilung:
**27.12.85 Patentblatt 85/52**

(84) Benannte Vertragsstaaten:
**AT BE FR GB IT NL SE**

(56) Entgegenhaltungen:
**DE - A - 2 053 624**
**DE - A - 2 757 597**
**DE - B - 2 234 915**
**GB - A - 1 273 528**

(73) Patentinhaber: **PETER-BTR Gummiwerke Aktiengesellschaft, D-6450 Hanau 8 (DE)**

(72) Erfinder: **Loose, Gerhard, Huttenstrasse 22, D-6450 Hanau 7 (DE)**

(74) Vertreter: **Keil, Rainer A., Dr.Dipl.-Phys. et al, Patentanwälte MERTENS & KEIL Ammelburgstrasse 34, D-6000 Frankfurt am Main 1 (DE)**

BUNDESDRUCKEREI BERLIN

## Beschreibung

Die Erfindung bezieht sich auf einen Antriebs- oder Fördergurt, der aus einzelnen Teillängen, z. B. durch Verbindungshaken zusammensetzbar ist, wobei die Teillängen mindestens eine mit Schußfäden aus Polyamid und Kettfäden aus Polyester gebildete, gegebenenfalls eine mehrlagige Gewebebindung aufweisende Gewebeeinlage aufweist, welche vorzugsweise so vorbehandelt ist, daß sie bei der Gummierung im wesentlichen längsspannungsfrei behandelbar und danach ohne Nachverstreckung vulkanisierbar ist.

Ein solcher Antriebs- oder Fördergurt ist aus der DE-A-2 234 915 bekannt:

Für die Verwendung von Antriebs- oder Fördergurten im Untertagebau müssen diese einem Filtertest genügen, welcher voraussetzt, daß beim Verschwelen des Förderbandmaterials die Menge der Schwelprodukte ein vorgegebenes Maß nicht überschreitet. Bei Antriebs- oder Fördergurten der eingangs genannten Art bestimmt insbesondere der Polyesteranteil der Verstärkungsgewebeeinlage die Tauglichkeit hinsichtlich des Schwelverhaltens wesentlich mit, d. h. je höher der Polyesteranteil des Gewebes ist, um so weniger kann das Förderbandmaterial den vorgeschriebenen Filtertest bestehen. Andererseits ist für höhere Festigkeitstypen von Antriebs- oder Fördergurten eine stärkere Gewebeeinlage unbedingt erforderlich. Für die hohe Festigkeit und Dehnungsarmut von Antriebs- oder Fördergurten sind aber insbesondere die in Kettrichtung verlaufenden Polyesterfäden bestimmt. Bei der durch Erhöhung der Anzahl von Kettfäden aus Polyester angestrebten Erhöhung der Festigkeit und Dehnungsarmut von Antriebs- oder Fördergurten stößt man im Hinblick auf den bezüglich des Schwelverhaltens zu bestehenden Filtertest sehr bald auf vorgegebene Grenzen.

Die DE-A-2 757 597 bezieht sich lediglich auf ein Einlage-Gewebe für die Herstellung von Transportbändern und Antriebsriemen, welches unter Verwendung texturierter, hochfester Filamentgarne oder -zwirne und nicht-texturierter, hochfester Filamentgarne oder -zwirne hergestellt ist. Hierdurch soll eine wesentliche Verbesserung der Haftung zwischen Beschichtungsmasse und Gewebe erreicht werden. Das Gewebe kann beispielsweise aus einer Kombination von texturierten, hochfesten Polyester-Filamentgarnen oder -zwirnen und nicht texturierten, hochfesten Polyamid-Filamentgarnen oder -zwirnen, jeweils vorzugsweise in der Form von Mischzwirnen, bestehen. Dabei kann die Kombination von texturierten, hochfesten Polyester-Filamentgarnen oder -zwirnen und nicht texturierten, hochfesten Polyamid-Filamentgarnen oder -zwirnen nur in der Kettrichtung eingesetzt werden, während in der Schußrichtung beliebige Materialien, vorzugsweise ebenfalls eine Kombination von texturierten hochfesten Polyester-Filamentgarnen oder -zwirnen und nicht texturierten hochfesten Polyamid-Filamentgarnen oder -zwirnen, vorzugsweise in der Form von Mischzwirnen verwendet sind. Wenn den genannten Garn- bzw. Zwirnkombinationen Zellulose-Fasergarne zugesetzt werden, kann das Auftreten schädlicher Brandgase entsprechend dem Zelluloseanteil verringert werden. Von einer Verwendbarkeit der Transportbänder oder Antriebsriemen hinsichtlich des Schwelverhaltens im Untertagebau geht hieraus nichts hervor.

Nach der GB-A-1 273 528 wird eine Einlage für Fördergurte vorgeschlagen, bei welchem wahlweise Polyester- oder Polyamidgarne in Kette oder Schuß verwendet werden können, um bei Bedarf die erforderlichen Festigkeitseigenschaften zu erreichen und den jeweils kostengünstigen Festigkeitsträger auswählen zu können. Die Kettgarne können aus Polyester oder Polyamid oder Mischungen oder Gemischen einer dieser beiden Materialien, das heißt zum Beispiel aus unterschiedlichen Typen oder Qualitäten von Polyesterfasern oder aus unterschiedlichen Typen von Polyestereinzelgarnen, bestehen. Hierbei handelt es sich um eine Einlage mit sogenannten Stengelketten, wobei zwischen den tragenden Kettgarnen und den Schußgarnen keine Verwebung vorliegt, der Zusammenhalt der einzelnen Garnsysteme also nur durch eine besondere Bindkette erreicht wird.

Aufgabe der vorliegenden Erfindung ist es, einen Antriebs- oder Fördergurt der gattungsgemäßen Art so weiterzubilden, daß er trotz höherer Festigkeit und hoher Dehnungsarmut auch für den Einsatz im Untertagebau geeignet ist.

Diese Aufgabe wird erfindungsgemäß dadurch gelöst, daß wenigstens einige Kettfäden ganz oder teilweise mit Polyamid beschichtet sind oder daß bei wenigstens einigen Kettfäden jeweils wenigstens ein Polyestereinzelfaden mit wenigstens einem Polyamideinzelfaden zusammen verzwirnt ist.

Der Erfindung liegt die überraschende Erkenntnis zugrunde, daß man bei einem gattungsgemäßen Antriebs- oder Fördergurt die Anzahl der Kettfäden aus Polyester zur Erhöhung der Festigkeit bei hoher Dehnungsarmut, ohne daß die Tauglichkeit für den Einsatz im Untertagebau im Hinblick auf die Schwelproduktabgabe beeinträchtigt wird, erhöhen kann, wenn man gleichzeitig wenigstens einigen in Kettrichtung verlaufenden Polyesterfäden eine hinreichende Menge an Polyamid in unmittelbarer Nachbarschaft zuordnet, sei es dadurch, daß wenigstens einige Kettfäden ganz oder teilweise mit Polyamid beschichtet sind oder bei wenigstens einigen Kettfäden jeweils wenigstens ein Polyestereinzelfaden mit wenigstens einem Polyamideinzelfaden zusammen verzwirnt ist. Offenbar beeinflussen sich dadurch die Zersetzungen des Polyesters und des unmittelbar benachbarten Polyamids beim Schwelvorgang in solcher Weise, daß die Mengen der entstehenden atmungsfilterschädlichen Schwelprodukte verringert werden. Der Erfindungsgedanke kann demnach Anwendung finden, wo man entweder bei durch erhöhte Zahl der in Kettrichtung verlaufenden Polyesterfäden, gleichwohl ein Bestehen des Filtertests erreichen oder bei gleichbleibender Zahl von Polyesterfäden und damit gleichbleibender Festigkeit eines dem Filtertest bereits genügenden Gurtes die Menge der entstehenden Schwelprodukte noch weiter herabsenken will.

Vorzugsweise sind bei wenigstens einigen Kettfäden jeweils mehrere Polyesterfäden mit einem Polyamideinzelfaden zusammen verzwirnt.

Es können auch bei wenigstens einigen Kettfäden jeweils wenigstens ein Polyestereinzelfaden von wenigstens einem Polyamideinzelfaden umzwirnt sein.

Ferner ist es möglich, daß bei wenigstens einigen Kettfäden jeweils mehrere Polyestereinzelfäden von wenigstens einem Polyamideinzelfaden umzwirnt sind.

Durch die Anzahl der jeweils mit einem Polyamidfaden verzwirnten oder umzwirnten und/oder mit Polyamid beschichteten Polyesterkettfäden kann das Verhältnis von Polyesteranteil und Polyamidanteil der in Kettrichtung verlaufenden Fäden auf einen günstigsten Wert eingestellt werden.

Ein Vergleich eines herkömmlichen Gurtes mit einem erfindungsgemäßen Gurt gleicher Festigkeit von 1250 N/mm Gurtbreite im sogenannten Filterselbstrettungstest ergab beispielsweise bei dem herkömmlichen Gurt einen Anstieg des Einatmungswiderstandes im konstanten Luftstrom von 94 l/min von mehr als 14 mbar und bei dem erfindungsgemäßen Gurt einen Anstieg des Einatmungswiderstandes im konstanten Luftstrom von 94 l/min von lediglich 1,7 mbar. Durch die erfindungsgemäße Maßnahme der Zuordnung von Polyamid zu den in Kettrichtung verlaufenden Polyesterfäden konnte also ersichtlich aus einem bezüglich des Filtertestes untauglichen Gurt ein in dieser Hinsicht tauglicher Gurt gleicher Festigkeit geschaffen werden.

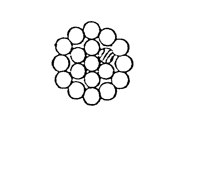

Die einzige Figur zeigt schematisch im Schnitt einen in Kettrichtung verlaufenden Kettfaden-Zwirn aus Polyestereinzelfäden und einen Polyamideinzelfaden (schraffiert) nach der Erfindung.

## Patentansprüche

1. Antriebs- oder Fördergurt, der aus einzelnen Teillängen, z. B. durch Verbindungshaken, zusammensetzbar ist, wobei die Teillängen mindestens eine mit Schußfäden aus Polyamid und Kettfäden aus Polyester gebildete, ggf. eine mehrlagige Gewebebindung aufweisende Gewebeeinlage aufweist, welche vorzugsweise so behandelt ist, daß sie bei der Gummierung im wesentlichen längsspannungsfrei behandelbar und danach ohne Nachverstreckung vulkanisierbar ist, dadurch gekennzeichnet, daß wenigstens einige Kettfäden ganz oder teilweise mit Polyamid beschichtet sind oder bei wenigstens einigen Kettfäden jeweils wenigstens ein Polyestereinzelfaden mit wenigstens einem Polyamideinzelfaden zusammenverzwirnt ist.

2. Antriebs- oder Fördergurt nach Anspruch 1, dadurch gekennzeichnet, daß bei wenigstens einigen Kettfäden jeweils mehrere Polyestereinzelfäden mit einem Polyamideinzelfaden zusammen verzwirnt sind.

3. Antriebs- oder Fördergurt nach Anspruch 1, dadurch gekennzeichnet, daß bei wenigstens einigen Kettfäden jeweils wenigstens ein Polyestereinzelfaden von wenigstens einem Polyamideinzelfaden umzwirnt ist.

4. Antriebs- oder Fördergurt nach Anspruch 3, dadurch gekennzeichnet, daß bei wenigstens einigen Kettfäden jeweils mehrere Polyestereinzelfäden von wenigstens einem Polyamideinzelfaden umzwirnt sind.

## Claims

1. A power transmission or conveyor belt composable of individual partial lengths, e. g. by connecting hooks, with the partial lengths comprising at least one fabric insert formed of polyamide weft threads and polyester warp threads and, optionally, comprising a multi-layer weave, with the fabric insert, preferably, being so treated as to permit, during rubber coating, a substantially warp tension-free treatment and subsequent vulcanization thereof with no need for supplementary drawing, characterized in that at least some warp threads are polyamide-coated in whole or part or that in at least some warp threads respectively at least one single polyester thread is twisted together with at least one single polyamide thread.

2. A power transmission or conveyor belt according to claim 1, characterized in that in at least some warp threads respectively several single polyester threads are twisted together with a single polyamide thread.

3. A power transmission or conveyor belt according to claim 1, characterized in that in at least some warp threads respectively at least one single polyester thread is twisted about by at least one single polyamide thread.

4. A power transmission or conveyor belt according to claim 3, characterized in that in at least some warp threads respectively several single polyester threads are twisted about by at least one single polyamide thread.

## Revendications

1. Courroie de transmission ou bande transporteuse composables des longueurs partitielles individuelles, par example, par l'intermédiaire des crochets de raccord, les longueurs partitielles comportant au moins une insertion de tissu formée par des fils de trame de polyamide et des fils de chaîne de polyester et éventuellement comportant une tissure multiple, ladite insertion de tissu préférablement étant traitée dans une manière permettant pendant la gommation un traitement essentiellement sans effort longitudinal et une vulcanisation suivante sans bandage supplémentaire, caractérisé en ce qu'au moins quelques fils de chaîne sont couchés de polyamide en entier ou en partie ou au moins dans quelques fils de chaîne chaque fois au moins un fils individuel de polyester est retordu avec au moins un fils individuel de polyamide.

2. Courroie de transmission ou bande transporteuse selon la revendication 1, caractérisé en ce que dans au moins quelques fils de chaîne chaque fois plusieurs fils individuels de polyester sont retordus avec un fils individuel de polyamide.

3. Courroie de transmission ou bande transporteuse selon la revendication 1, caractérisé en ce que dans au moins quelques fils de chaîne chaque fois au moins un fils individuel de polyester est retordu par au moins un fils individuel de polyamide.

4. Courroie de transmission ou bande transporteuse selon la revendication 3, caractérisé en ce que dans au moins quelques fils de chaîne chaque fois plusieurs fils individuels de polyester sont retordus par au moins un fils individuel de polyamide.